# EUROPEAN PATENT APPLICATION

(11) **EP 2 034 425 A1**
(43) Date of publication of application: **11.03.2009**
(21) Application number: 08252748.2
(22) Date of filing: 19.08.2008
(51) Int. Cl.: G06K 7/00

(54) **Card holder and communication method**

(30) Priority: 10.09.2007 JP 2007233879
(71) Applicant: Sony Corporation, Tokyo 108-0075 (JP)
(72) Inventor: Kon, Takayasu, Tokyo 108-0075 (JP); Kamada, Yasunori, Tokyo 108-0075 (JP); Sako, Yoichiro, Tokyo 108-0075 (JP)
(74) Representative: Turner, James Arthur

(57) **Abstract**

A card holder is provided, which includes a holding section holding, in an attachable/ detachable manner, a plurality of non-contact type IC cards capable of non-contact communication with an external unit, an antenna for external communication communicating contactlessly with the external unit, an antenna for card communication communicating contactlessly with each of the plurality of the non-contact type IC cards held in the holding section, and an amplification section amplifying each of a carrier signal received by the antenna for external communication and transmitted from the external unit and a response signal, to the carrier signal, transmitted from each of the plurality of the non-contact type IC cards and received by the antenna for card communication.

## Description

The present invention relates to a card holder and a communication method.

In recent years, non-contact type IC (Integrated Circuit) card (hereinafter called by their generally used name "smart cards") capable of communicating contactlessly with a reader/writer (or an information processor with reader/writer function) has become widespread. The reader/writer and the non-contact type IC card communicate with each other by using, for example, a magnetic field of a specific frequency such as 13.56 MHz as a carrier. Specifically, the reader/writer and the non-contact type IC card may communicate with each other by the reader/writer transmitting a carrier carrying carrier signal and the non-contact type IC card which received the carrier with an antenna sending back a response signal corresponding to the received carrier signal by load modulation.

Further, the non-contact type IC card may be driven by a voltage (induced voltage), as a power source, generated responding to a flux when a magnetic field generated from the reader/writer passes through a communication antenna. Accordingly, the non-contact type IC card may perform various processings involved in the communication with the reader/writer without needing a separate power source.

Further, by including a resonant circuit with a specific frequency (resonant frequency) such as 13.56 MHz, the non-contact type IC card demodulates the carrier signal transmitted from the reader/writer, securing of power, and the like, with accuracy, and aims to stabilize the communication with the reader/writer.

Thus, for example, even with the non-contact type IC card being inside a wallet or an IC card holder, by holding the card over the reader/writer, data communication is enabled. For this reason, the non-contact type IC card is applied to IC card system offering a variety of services such as electronic money system, ticketing system of public transportation, and security system into a building or a room using employee ID card, and the non-contact type IC card is becoming more widely spread.

Further, with the IC card system spreading, it is becoming more common for users to carry a plurality of non-contact type IC cards relating to similar or dissimilar services. When carrying a plurality of non-contact type IC cards, users keep the plurality of the non-contact type IC cards in a wallet, a bag or a card holder, etc. If users hold the plurality of the non-contact type IC cards kept together as described above over the reader/writer simultaneously, it results in a plurality of the IC cards existing within the communication range of the reader/writer (within a range where the intensity of the magnetic field of the reader/writer is strong enough for communication). In such a case, due to various factors such as antenna coils of the plurality of the non-contact type IC cards magnetically coupling with each other, the resonant frequency of each non-contact type IC card varies, possibly disabling the communication of any of the non-contact cards.

In this circumstance, a technology is being developed for stabilizing the communication of each non-contact type IC card by arranging an interference prevention part between two non-contact type IC cards. For example, JP-A-2005-11044 discloses a technology relating to an IC card holder with an interference prevention part arranged between two non-contact type IC cards.

However, the non-contact type IC card and the reader/writer (or an information processor with reader/writer function. Here, the reader/writer function is a function of actively transmitting a carrier.) do not always communicate with each other at a fixed distance or a fixed location, since the communication is performed with a user holding the non-contact type IC card over the reader/writer, for example. Thus, even if the non-contact type IC card is provided with a resonant circuit, there are cases where enough power for driving the non-contact type IC card is not obtained or signal is not demodulated from magnetic field (hereinafter referred to as "carrier") of a predetermined frequency transmitted from the reader/writer. Accordingly, the user has to hold again the non-contact type IC card over the reader/writer, for example, which is burdensome for the user.

However, with an IC card holder using the technology of arranging an interference prevention part between two non-contact type IC cards, at the time of using, it is necessary to hold the IC card holder over the reader/writer with the side in which a desired non-contact type IC card is held facing the reader/writer. Thus, after all, users have to select by themselves the card to be used. That is, even when using a card holder using the related technology of arranging an interference prevention part between two non-contact type IC cards, it only results in that the communication is performed between a non-contact type IC card on the selected side and the reader/writer. Accordingly, even when using a card holder using the related technology of arranging an interference prevention part between two non-contact type IC cards, enough power for driving the non-contact type IC card may not be obtained or signal may not be demodulated from a carrier transmitted from the reader/writer, which is burdensome for the user.

Various respective aspects and features of the invention are defined in the appended claims. Combinations of features from the dependent claims may be combined with features of the independent claims as appropriate and not merely as explicitly set out in the claims.

Thus, the present invention is provided in view of the above-described issues, and it is desirable to provide a new and improved card holder and a new and improved communication method, which enable to amplify signals transmitted and received between the reader/writer and the non-contact type IC card, and to stabilize the communication between the reader/writer and the non-contact type IC card.

According to an embodiment of the present invention, there is provided a card holder including a holding section holding, in an attachable/detachable manner, a plurality of non-contact type IC cards capable of non-contact communication with an external unit, an antenna for external communication communicating contactlessly with the external unit, an antenna for card communication communicating contactlessly with each of the plurality of the non-contact type IC cards held in the holding section, and an amplification section amplifying each of a carrier signal transmitted from the external unit and received by the antenna for external communication and a response signal to the carrier signal, transmitted from each of the plurality of the non-contact type IC cards and received by the antenna for card communication.

The card holder may include a holding section, an antenna for external communication, an antenna for card communication, and an amplification section. The holding section may hold a plurality of non-contact type IC cards, each in an attachable/detachable manner. The antenna for external communication is, for example, a communication antenna communicating contactlessly with an external unit. The antenna for card communication is, for example, an antenna for internal communication communicating contactlessly with the plurality of non-contact type IC cards held in the holding section. The amplification section may amplify each of a signal received by the antenna for external communication and a signal received by the antenna for internal communication. With such configuration, signals transmitted and received between the external unit (reader/writer or an information processor with reader/writer function, for example) and the non-contact type IC card may be amplified, and the communication between the external unit and the non-contact type IC card may be stabilized.

Further, the amplification section may amplify the carrier signal to a predetermined value in accordance with the number of the non-contact type IC cards held in the holding section by changing an amplification factor based on the number of the non-contact type IC cards held in the holding section and amplitude of the inputted carrier signal.

With such configuration, each of the non-contact type IC cards held in the holding section may obtain a larger power from the external unit, and also, may demodulate the carrier signal with more accuracy.

Further, the card holder may further include a control section setting a predetermined value in the amplification section in accordance with the number of the non-contact type IC cards in accordance with attaching/detaching of the non-contact type IC cards in the holding section.

With such configuration, a carrier signal may be amplified to a predetermined value in accordance with the number of the non-contact type IC cards held in the holding section.

Further, the amplification section may amplify the response signal to a predetermined value by changing an amplification factor in accordance with amplitude of the inputted response signal.

With such configuration, a response signal may be sent to the external unit with more accuracy, and the external unit may demodulate the response signal sent.

According to another embodiment of the present invention, there is provided a card holder including a holding section holding, in an attachable/detachable manner, a non-contact type IC card capable of non-contact communication with an external unit, an antenna for external communication communicating contactlessly with the external unit, an antenna for card communication communicating contactlessly with the non-contact type IC card held in the holding section, and an amplification section amplifying each of a carrier signal transmitted from the external unit and received by the antenna for external communication, and a response signal to the carrier signal, received by the antenna for card communication and transmitted from the non-contact type IC card.

The card holder may include a holding section, an antenna for external communication, an antenna for card communication, and an amplification section. The holding section may hold, in an attachable/detachable manner, a non-contact type IC card capable of non-contact communication with the external unit. The antenna for external communication is, for example, a communication antenna communicating contactlessly with an external unit. The antenna for card communication is, for example, an antenna for internal communication communicating contactlessly with the non-contact type IC card held in the holding section. The amplification section may amplify each of a signal received by the antenna for external communication and a signal received by the antenna for internal communication. With such configuration, signals transmitted and received between the external unit (reader/writer or an information processor with reader/writer function, for example) and the non-contact type IC card may be amplified, and the communication between the external unit and the non-contact type IC card may be stabilized.

Further, the amplification section may amplify the carrier signal to a predetermined value by changing an amplification factor in accordance with amplitude of the inputted carrier signal, and may amplify the response signal to a predetermined value by changing an amplification factor in accordance with amplitude of the inputted response signal.

With such configuration, signals transmitted and received between the external unit (reader/writer or an information processor with reader/writer function, for example) and the non-contact type IC card may be amplified, and the communication between the external unit and the non-contact type IC card may be stabilized.

According to another embodiment of the present invention, there is provided a card holder including a holding section holding, in an attachable/detachable manner, a plurality of non-contact type IC cards capable of non-contact communication with an external unit, an antenna for external communication communicating contactlessly with the external unit, an antenna for card communication communicating contactlessly with the plurality of the non-contact type IC cards held in the holding section, a storage section capable of storing codes relating to services each of the non-contact type IC cards held in the holding section relates to, a control section selecting a non-contact type IC card to be used for communication with the external unit based on code included in a carrier signal transmitted from the external unit indicating a predetermined service and code stored in the storage section, and connecting the selected non-contact type IC card and the external unit in a communicable manner via the antenna for external communication and the antenna for card communication, and an amplification section amplifying each of the carrier signal received by the antenna for external communication and a response signal to the carrier signal, received by the antenna for card communication and transmitted from the non-contact type IC card.

The card holder may include a holding section, an antenna for external communication, an antenna for card communication, a storage section, a control section, and an amplification section. The holding section may hold a plurality of non-contact type IC cards, each in an attachable/detachable manner. The antenna for external communication is, for example, a communication antenna communicating contactlessly with an external unit. The antenna for card communication is, for example, an antenna for internal communication communicating contactlessly with a plurality of non-contact type IC cards held in the holding section. The storage section may store codes relating to services each of the non-contact type IC cards held in the holding section relates to. The control section may select a non-contact type IC card to be used for communication with the external unit based on code included in a carrier signal transmitted from the external unit and code stored in the storage section. Further, the control section may connect the selected non-contact type IC card and the external unit in a communicable manner via the antenna for external communication and the antenna for card communication. The amplification section may amplify each of a signal received by the antenna for external communication and a signal received by the antenna for internal communication. With such configuration, signals transmitted and received between the external unit (reader/writer or an information processor with reader/writer function, for example) and the non-contact type IC card may be amplified, and the communication between the external unit and the non-contact type IC card may be stabilized.

According to another embodiment of the present invention, there is provided a communication method for a card holder including a holding section capable of holding a non-contact type IC card capable of non-contact communication with an external unit, an antenna for external communication communicating contactlessly with the external unit, and an antenna for card communication communicating contactlessly with the non-contact type IC card, including amplifying step of amplifying amplitude of a carrier signal to a predetermined value when the carrier signal transmitted from the external unit is received, and transmitting step of transmitting the carrier signal amplified in the amplifying step of amplifying amplitude of the carrier signal to a predetermined value to the non-contact type IC card.

By using such method, the non-contact type IC card held in the holding section may obtain a larger power from the external unit, and also, may demodulate the carrier signal with more accuracy.

Further, the communication method may further include amplifying step of amplifying amplitude of a response signal to a predetermined value when the response signal transmitted from the non-contact type IC card in accordance with the carrier signal transmitted in the transmitting step is received, and transmitting step of transmitting the response signal amplified in the amplifying step of amplifying amplitude of the response signal to a predetermined value to the external unit.

By using such method, a response signal may be sent to the external unit with more accuracy, and the external unit may demodulate the sent response signal. Accordingly, by using such a method, signals transmitted and received between the external unit (reader/writer or an information processor with reader/writer function, for example) and the non-contact type IC card may be amplified, and the communication between the external unit and the non-contact type IC card may be stabilized.

According to the embodiments of the present invention described above, signals transmitted and received between the external unit and the non-contact type IC card may be amplified, and the communication between the external unit and the non-contact type IC card may be stabilized.
Embodiments of the invention will now be described with reference to the accompanying drawings, throughout which like parts are referred to by like references, and in which:
FIG. 1A is an explanatory diagram showing an example of the issues to be covered by a card holder according to an embodiment of the present invention.
FIG. 1B is an explanatory diagram showing an example of the issues to be covered by a card holder according to the embodiment of the present invention.
FIG. 2 is an explanatory diagram explaining a communication method between a reader/writer and a non-contact type IC card according to the embodiment of the present invention.
FIG. 3 is an explanatory diagram showing an appearance of a card holder according to the first embodiment of the present invention.
FIG. 4 is a block diagram showing a configuration example of the card holder according to the first embodiment of the present invention.
FIG. 5A is an explanatory diagram showing an outline of amplification in an amplification section according to the first embodiment of the present invention.
FIG. 5B is an explanatory diagram showing an outline of amplification in an amplification section according to the first embodiment of the present invention.
FIG. 6 is a flow chart showing an example of amplification method of the amplification section according to the first embodiment of the present invention.
FIG. 7 is an explanatory diagram showing an appearance of a card holder according to the second embodiment of the present invention.
FIG. 8 is a block diagram showing a schematic configuration example of the card holder according to the second embodiment of the present invention.
FIG.9 is a block diagram showing a configuration example of the card holder according to the second embodiment of the present invention.
FIG. 10 is a block diagram showing a configuration example of a card holder according to the third embodiment of the present invention.
FIG. 11A is an explanatory diagram showing the outline of amplification in an amplification section according to the third embodiment of the present invention.
FIG. 11B is an explanatory diagram showing the outline of amplification in an amplification section according to the third embodiment of the present invention.
FIG. 12 is a flow chart showing an example of a set command generation method of a control section according to the third embodiment of the present invention.
FIG. 13 is a flow chart showing a first example of an amplification method of an amplification section according to the third embodiment of the present invention.
FIG. 14 is a flow chart showing a second example of an amplification method of an amplification section according to the third embodiment of the present invention.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### (An Example of Issues to be Covered By a Card Holder according to the Embodiment of the Present Invention)

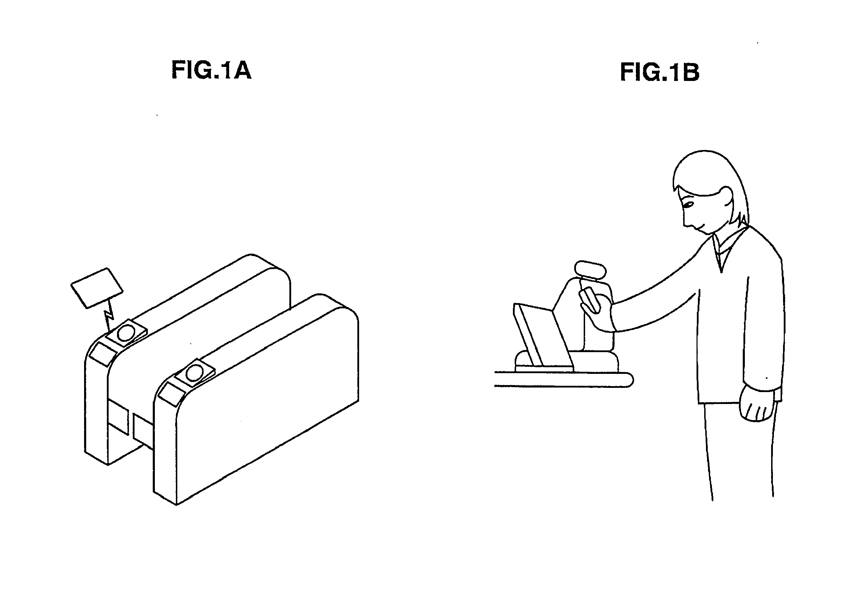

Before describing a card holder according to the embodiment of the present invention, an example of the issues to be covered by the card holder according to the embodiment of the present invention will be described. FIGS. 1A and 1B are explanatory diagrams showing examples of the issues to be covered by a card holder according to the embodiment of the present invention.

As shown in FIG. 1A, a user of a non-contact type IC card may use public transportation by holding a non-contact type IC card for public transportation in which information of a commuter pass and the like is recorded over an automatic ticket gate as a reader/writer (data reading/writing device), for example.

Further, as shown in FIG. 1B, a user may purchase a desired product by holding a non-contact type IC card for purchasing in which information of electronic money value is recorded, or a mobile communication device such as a cell phone that holds a non-contact IC chip in which information of electronic money value is recorded over a reader/writer (or a host device with reader/writer function) installed in the location of service provision.

As shown in FIGS. 1A and 1B, to enjoy a service, a user has to move the non-contact type IC card into the communication range of the reader/writer (within a range where the intensity of the magnetic field of the reader/writer is strong enough for communication) by holding the non-contact type IC card (or a cell phone holding the non-contact IC chip) over the reader/writer. However, since a carrier transmitted from the reader/writer is invisible, it is hard for the user to know accurately how close the non-contact type IC card should be to the reader/writer. Further, communication distance of the communication between the reader/writer and the non-contact type IC card and positional relationship between the reader/writer and the non-contact type IC card depend on the user's operation of holding over, and thus, the communication is not always performed at a fixed distance or a fixed location.

Accordingly, in a case of receiving a service by using a non-contact type IC card, there were cases where, even though a user held a non-contact type IC card over an automatic ticket gate (a reader/writer), the user could not go through the automatic ticket gate, and the user had to hold over the card again, which was burdensome to the user.

The card holder according to the embodiment of the present invention recognizes it as a problem that there are cases as described above where a user cannot receive a service when holding a non-contact type IC card over a reader/writer, and tries to solve the problem as described above by stabilizing the communication between the reader/writer and the non-contact type IC card.

### (Communication Method between Reader /Writer and Non-Contact Type IC Card)

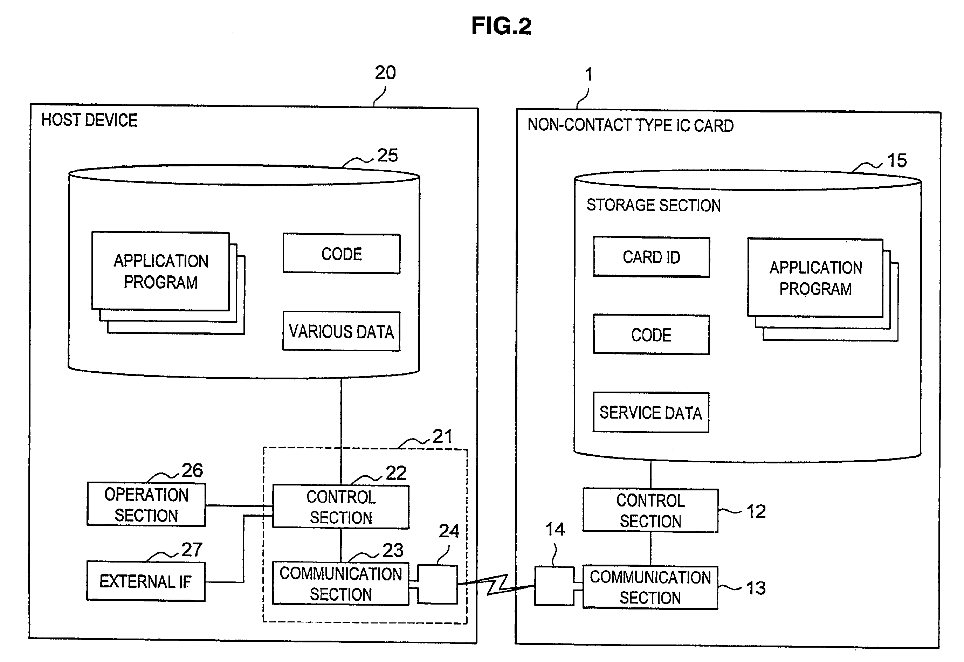

Here, a communication method between the reader/writer and the non-contact type IC card according to the embodiment of the present invention will be described in detail. FIG. 2 is an explanatory diagram explaining the communication method between the reader/writer and the non-contact type IC card according to the embodiment of the present invention. Incidentally, in the following, a configuration is shown in which a host device includes the reader/writer. However, the configuration of the embodiment of the present invention is not limited to such, and the host device and the reader/writer may be separate bodies, for example.

### (Configuration Example of Host Device 20)

Referring to FIG. 2, the host device 20 may include a control section 22, a communication section 23, an antenna 24, a storage section 25, an operation section 26, and an external interface 27. Here, in the host device 20 as shown in FIG. 2, the reader/writer 21 may be configured with the control section 22, the communication section 23, and the antenna 24, for example. Further, the host device 20 may include a ROM (Read Only Memory; not shown) in which programs to be used by the control section 22 and data for control such as operation parameters are recorded, a RAM (Random Access Memory; not shown) primarily storing programs to be executed by the control section 22, and the like, and a display section (not shown). In the host device 20, each component may be connected by a bus as the transmission channel for data, for example. Here, the display section (not shown) may be an LCD (Liquid Crystal Display), an organic EL display (organic ElectroLuminescence display, also called an OLED display (Organic Light Emitting Diode display)), or the like, but it is not limited to such.

Incidentally, in FIG. 2, a configuration is shown in which the host device 20 includes the reader/writer 21. However, when the host device and the reader/writer are separate bodies, the reader/writer may include a control section controlling the entire reader/writer, programs providing a predetermined service, a storage section in which data for control such as operation parameters are recorded, and the like.

The control section 22 is configured with an MPU (Micro Processing Unit), for example, and may control the entire host device 20. Further, the control section 22 may operate according to the programs stored in the storage section 25, for example, and may execute calculation relating to a predetermined service, command generation, control of transmission and reception of various information. Thereby, the reader/writer can execute card detection (polling) on the non-contact type IC cards 1, mutual authentication, reading and writing of data, and the like.

The communication section 23 executes, based on the instructions from the control section 22, non-contact communication with the non-contact type IC card 1 by using the antenna 24. The communication section 23 is configured with, for example, a modulation circuit (not shown) performing ASK modulation (Amplitude Shift Keying), and an amplifier circuit (not shown) amplifying the output of the modulation circuit, and may transmit a carrier signal on a carrier from the antenna 24. The communication section 23 performs modulation in accordance with command and data relating to the predetermined service with the configuration as described above, for example, and transmits the command and data to the non-contact type IC card 1.

Further, the communication section 23 demodulates a response signal from the non-contact type IC card 1 by envelope-detecting the amplitude change of the voltage at the end of the antenna 24, for example. Then, the communication section 23 may output the command and data transmitted from the non-contact type IC card 1, obtained by demodulation, to the control section 22. Incidentally, the means of the communication section 23 for demodulating response signal is not limited to the above, and the response signal may be demodulated by using the phase change of the voltage in reference to the reference clock at the end of the antenna 24, for example.

The antenna 24 is a communication antenna communicating with the non-contact type IC card 1. The antenna 24 has, for example, a coil having a predetermined inductance and a capacitor having a predetermined capacitance, and configures a resonant circuit with a predetermined frequency (for example, 13.56 MHz).

The storage section 25 is a storage means included in the host device 20, and may store various information. Here, the information to be stored in the storage section 25 may be, for example, programs for making the control section 22 operate to provide a predetermined service (application program), code indicating a service which the reader/writer 21 deals with (for example, service code and system code), data obtained from the non-contact type IC card 1, data processed by the control section 22, input data from the operation section 26 and the external interface 27, but they are not limited to such. Further, the storage section 25 may be, for example, a magnetic recording medium such as a Hard Disk, or a non-volatile memory such an EEPROM (Electrically Erasable and Programmable Read Only Memory), a flash memory, a MRAM (Magnetoresistive Random Access Memory), a FeRAM (Ferroelectric Random Access Memory), or a PRAM (Phase change Random Access Memory), but it is not limited to such.

The operation section 26 is an operation means of the host device 20 enabling a predetermined operation by a user. For example, it can make the host device 20 operate as desired by the user, such as activation of a specific application program stored in the storage section 25. Here, the operation section 26 may be an operation input device such as a key board and a mouse, buttons, direction keys, or a combination thereof, but it is not limited to such. Incidentally, the operation section 26 may be integrated into a display section (not shown) like a touch screen, for example.

The external interface 27 (external IF 27) is an interface for transmitting and receiving information by connecting with the external unit (not shown). Here, the host device 20 and the external unit (not shown) may be connected with each other physically via an USB (Universal Serial Bus) terminal or a terminal of IEEE 1394 Standard, for example, or they may be connected with each other wirelessly by using a WUSB (Wireless Universal Serial Bus), an IEEE 802.11, or the like. Further, the external unit (not shown) and the host device 20 may be connected with each other via a network, for example. Here, the network may be a wired network such as a LAN (Local Area Network) or a WAN (Wide Area Network), a wireless network such as a WLAN (Wireless Local Area Network) using MIMO (Multiple-Input Multiple-Output), or an Internet using communication protocol such as TCP/IP (Transmission Control Protocol/Internet Protocol), or the like, but it is not limited to such. Accordingly, the external interface 27 may be an interface adapted to the format of the external unit (not shown).

### (Configuration Example of Non-Contact Type IC Card 1)

Next, the non-contact type IC card 1 according to the embodiment of the present invention will be described. The non-contact type IC card 1 includes within a thin card exterior, for example, an antenna communicating contactlessly with a reader/writer, and an IC chip having an IC capable of executing a predetermined calculation. The IC chip may be tamper resistant. For example, writing, updating and the like may be performed safely on data such as electronic money whose may become a problem. Incidentally, the non-contact type IC card according to the embodiment of the present invention is not limited to be configured to include the antenna and the IC chip separately. For example, the antenna may be housed in the IC chip, or it is possible to include the antenna and the IC chip in one package.

Referring to FIG. 2, the non-contact type IC card 1 may include a control section 12, a communication section 13, an antenna 14, and a storage section 15. Here, the control section 12, the communication section 13 and the storage section 15 may be built in an IC chip, for example. However, the non-contact type IC card according to the embodiment of the present invention is not limited to be of such configuration. For example, in the non-contact type IC card according to the embodiment of the present invention, the control section, the communication section, the antenna, and the storage section may be embodied in IC chips.

The control section 12 is configured with an MPU (Micro Processing Unit), for example, and may control the entire non-contact type IC card 1. Further, the control section 12 may, for example, execute programs such as application program stored in the storage section 15, and may perform a predetermined calculation based on the execution of the program, command generation, control of transmission and reception of various information. Further, the control section 12 performs process relating to data relating to services (hereinafter, referred to as "service data") in response to various requests (for example, requests for reading-out and writing-in of data) indicated by the carrier signal transmitted from the reader/writer 21. Here, the processes relating to the service data may include reading out the service data from the storage section 15, writing the service data transmitted from the reader/writer 21 in the storage section 15, and the like, but they are not limited to such.

By demodulating AC component of the induced voltage, which is generated when a carrier transmitted from the reader/writer 21 passes through the antenna 14, the communication section 13 may retrieve the data transmitted from the reader/writer, and also, the communication section 13 may obtain power from the DC component of the induced voltage.

Further, the communication section 13 may, for example, perform load modulation in accordance with an instruction from the control section 12 (for example, instructions based on the results of various processings performed by the control section 12), and may perform communication such as responding to the reader/writer 21 via the antenna 14. More specifically, the non-contact type IC card 1 may send a response by the communication section 13 generating a demagnetizing field to the carrier from the antenna 14 by load modulation. The reader/writer 21 may detect a change in the impedance of the non-contact type IC card 1 generated by the load modulation as a response signal from the non-contact type IC card 1. That is, the non-contact type IC card may transmit a response signal to the reader/writer 21 by load modulation.

The communication section 13 may include, for example, a detector circuit, a clock extraction circuit, a demodulation circuit, a regulator, a load modulation circuit, and the like. The detector circuit rectifies the induced voltage, and the clock extraction circuit extracts clock from the induced voltage. Further, the demodulation circuit demodulates based on the induced voltage and retrieves command and service data transmitted from the reader/writer 21, and the regulator rectifies and stabilizes the induced voltage. The load modulation circuit is configured with a resistor having a predetermined resistance value and a transistor, and by performing switching based on instructions from the control section 12, changes the impedance of the non-contact type IC card 1 to the reader/writer 21.

The storage section 15 is a storage means included in the non-contact type IC card 1, and may store various information. Here, the information to be stored in the storage section 15 may be, for example, application programs to be executed by the control section 12, card ID for uniquely identifying the non-contact type IC card 1, code indicating a service the non-contact type IC card 1 deals with (service code, system code, and the like), and service data including data obtained from the reader/writer 21 or data processed by the control section 12. However, it is not limited to such. Further, the storage section 15 may be a non-volatile memory such as an EEPROM or a flash memory, for example, but it is not limited to such.

Incidentally, in a case where the non-contact type IC card 1 is a multi-application card that deals with a plurality of services, multiple kinds of codes, application programs and service data corresponding to each of the services, for example, are stored in the storage section 15.

With the configuration as shown in FIG. 2, by the reader/writer 21 of the host device 20 and the non-contact type IC card 1 communicating contactlessly with each other, a variety of services using non-contact type IC card 1 may be provided to users. Incidentally, as shown in FIG. 2, the non-contact type IC card 1 may directly communicate contactlessly with the reader/writer 21. However, it is not limited to such configuration, and the non-contact type IC card 1 may be held in the card holder according to the embodiment of the present invention, and communicate indirectly with the reader/writer 21 via the card holder according to the embodiment of the present invention.

In the following, the card holder according to the embodiment of the present invention will be described. Incidentally, as the card holder according to the embodiment of the present invention, a mode in which the card holder is capable of holding a non-contact type IC card is shown as an example. However, the card holder according to the embodiment of the present invention is not limited to be configured to be capable of holding a non-contact type IC card. For example, the card holder according to the embodiment of the present invention may be configured to hold an IC chip capable of communicating contactlessly with a reader/writer (that is, an IC chip holder).

### (First Embodiment)

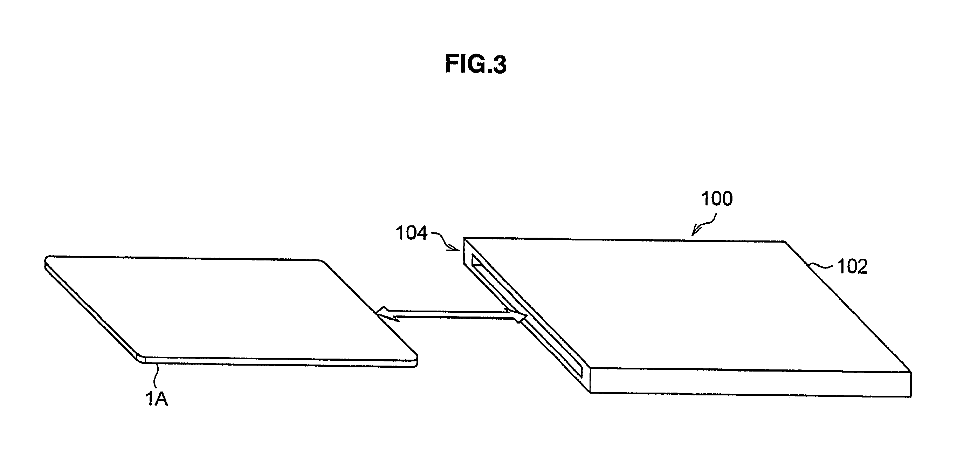

First, the appearance of a card holder according to the first embodiment of the present invention will be described. FIG. 3 is an explanatory diagram showing an appearance of a card holder 100 according to the first embodiment of the present invention.

Referring to FIG. 3, the card holder 100 includes a housing 102 in a substantially rectangular parallelepiped shape and a holding section 104 capable of holding a non-contact type IC card 1A, for example. Further, the card holder 100 may include an operation section (not shown) which a user can use for eject operation for ejecting a non-contact type IC card, and an internal power supply (not shown) such as a battery. Here, the operation section (not shown) may be buttons, direction keys, or a rotary selector such as a jog dial, or a combination thereof, but it is not limited to such.

The holding section 104 has a slot on one side of the housing 102, for example. By inserting/removing (attaching/detaching) the non-contact type IC card 1A into/from the slot, the non-contact type IC card 1 may be housed in the card holder 100 in an attachable /detachable manner.

### (Configuration Example of Card Holder 100)

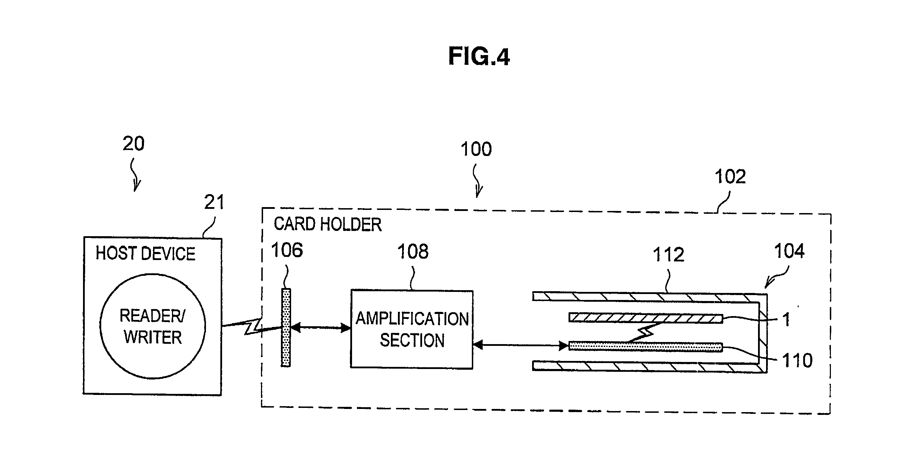

Next, a configuration of the card holder 100 according to the first embodiment of the present invention will be described. FIG. 4 is a block diagram showing a configuration example of the card holder 100 according to the first embodiment of the present invention.

Referring to FIG. 4, the card holder 100 may include a housing 102, a holding section 104, an antenna for external communication 106, an amplification section 108, an antenna for card communication 110, and a shield 112.

A holding section 104 for holding a non-contact type IC card 1A (having a configuration similar to that of the non-contact type IC car 1 as shown in FIG. 2) is provided inside the housing 102 of the card holder 100. The holding section 104 includes, for example, a slot as shown in FIG. 3, and may stably hold the non-contact type IC card 1A inserted from card insertion opening formed in the housing 102. Further, the antenna for card communication 110 is arranged in the holding section 104. Incidentally, the holding section according to the first embodiment of the present invention is not limited to be rectangular as shown in FIG. 4. For example, it is possible to set the shape of the holding section 104 in an arbitrary shape in accordance with the shape of the housing 102 of the card holder 100.

The antenna for external communication 106 is a communication antenna of the card holder 100 for communicating contactlessly with an external unit such as the reader/writer 21 of the host device 20. The antenna for external communication 106 may be configured with a resonant circuit having a coil having a predetermined inductance and a capacitor having a predetermined capacitance, for example.

Further, the antenna for external communication 106 receives a carrier transmitted from the reader/writer 21, generates, by the electromagnetic induction, an induced voltage in response to the carrier signal, and sends the induced voltage to the amplification section 108. In the following, the induced voltage in accordance with the carrier signal generated at the antenna for external communication 106 will be referred to as "input signal in response to the carrier signal" (or simply as "input signal").

The amplification section 108 amplifies the input signal in response to the carrier signal, sent from the antenna for external communication 106, and sends the input signal to the antenna for card communication 110. With the amplification section 108 amplifying the input signal in response to the carrier signal, the antenna for card communication 110 may transmit a carrier corresponding to the signal, which is the carrier signal received by the antenna for external communication 106 amplified, to the non-contact type IC card 1A.

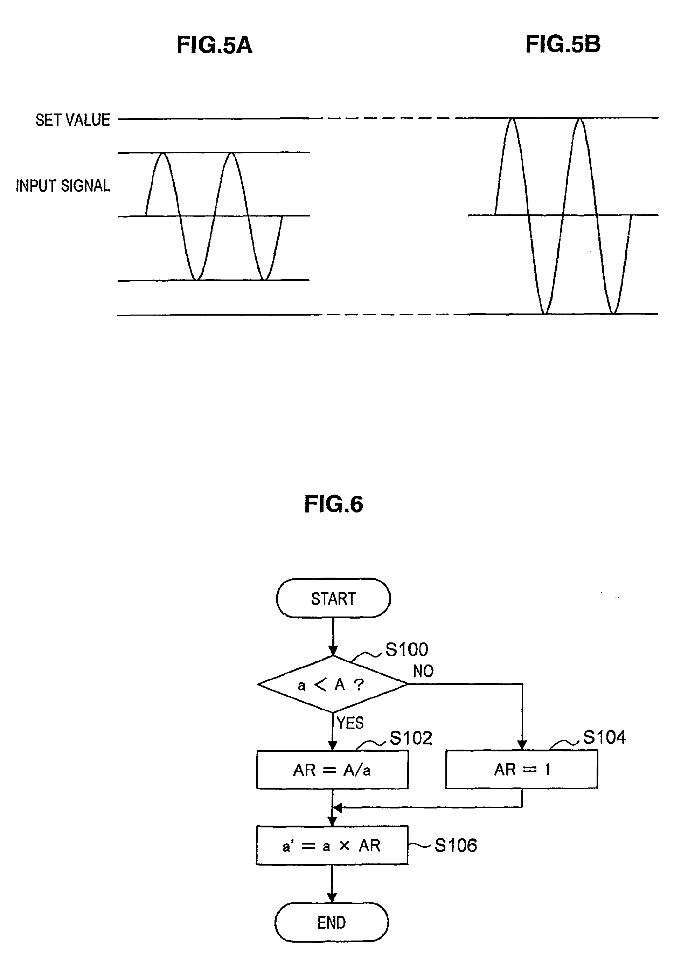

FIGS. 5A and 5B are explanatory diagrams showing an outline of amplification in the amplification section 108 according to the first embodiment of the present invention. FIG. 5A shows an example of the input signal corresponding to the carrier signal received by the antenna for external communication 106, and FIG. 5B shows an example of an amplified input signal output from the amplification section 108.

As shown in FIGS. 5A and 5B, the amplification section 108 according to the first embodiment of the present invention may amplify the amplitude of the input signal to a predetermined set value. In the following, an amplification method of the amplification section 108 according to the first embodiment of the present invention will be described.

### (Amplification Method according to First Embodiment)

FIG. 6 is a flow chart showing an example of the amplification method of the amplification section 108 according to the first embodiment of the present invention.

The amplification section 108 determines whether the magnitude of the amplitude a of the input signal (hereinafter referred to as "input amplitude a") is smaller than a predetermined set value A (hereinafter referred to as "set amplitude A") or not (step S100).

When it is determined that the input amplitude a is smaller than the set amplitude A in step S100, the amplification section 108 sets the amplification factor AR to "AR = A/a" (step S102).

Further, when it is determined that the input amplitude a is larger than the set amplitude A in step S100, the amplification section 108 sets the amplification factor AR to "AR = 1" (i.e., no amplification) (step S104).

The amplification section 108 amplifies the input signal based on the amplification factor AR set in step S102 or step S104 (step S106). Here, the amplitude of the amplified input signal (hereinafter referred to as "output amplitude") a' may be expressed as "a' = a x AR".

By using the method as shown in FIG. 6, for example, the amplification section 108 may amplify the amplitude of the input signal to a predetermined set value. Here, the amplification section 108 may perform amplification using the method as shown in FIG. 6 by including a comparator, a multistage amplifier and switches for switching the number of stages, for example. However, it is needless to say that the configuration of the amplification section 108 according to the first embodiment of the present invention for using the method as shown in FIG. 6 is not limited to such. Further, a voltage as a reference for comparison input to a comparator (hereinafter referred to as "reference voltage") may be supplied from an internal power supply (not shown), for example.

### (Modification Example of Amplification Method according to First Embodiment)

Incidentally, for the amplification method as shown in FIG. 6, a method of setting the amplification factor AR to 1 when the input amplitude a is larger than the set amplitude A (step S104) is described. However, the amplification method of the amplification section 108 according to the first embodiment is not limited to such method. For example, the amplification section 108 may include an AGC (Automatic Gain Control) circuit and may adjust the amplification factor to be able to obtain a fixed output.

By using the method as described above, the amplification section 108 may amplify the input signal in response to the carrier signal received by the antenna for external communication 106, and may send the input signal to the antenna for card communication 110.

Further, as in the case of the input signal in response to the carrier signal, the amplification section 108 may amplify an induced voltage, in accordance with the response signal, that the antenna for card communication 110 generated in accordance with the response signal transmitted from the non-contact type IC card 1A (hereinafter referred to as "input signal in response to the response signal"), and may send the signal to the antenna for external communication 106. With the amplification section 108 amplifying the input signal in response to the response signal, the antenna for external communication 106 may transmit a carrier (demagnetizing field) corresponding to the signal, which is the response signal received by the antenna for card communication 110 amplified, to the reader/writer 21.

Incidentally, the amplification section 108 according to the first embodiment of the present invention is not limited to be configured to amplify each of the input signal in response to the carrier signal and the input signal in response to the response signal, and it is needless to say that the amplification section 108 may amplify one of the input signal in response to the carrier signal and the input signal in response to the response signal.

The antenna for card communication 110 is a communication antenna communicating contactlessly with the non-contact type IC card 1A held in the holding section 104. The antenna for card communication 110 may be configured with a resonant circuit having a coil having a predetermined inductance and a capacitor having a predetermined capacitance, for example. Further, the antenna for card communication 110 is arranged facing the non-contact type IC card 1A, for example. Accordingly, the antenna for card communication 110 may communicate contactlessly with the non-contact type IC card 1A held in the holding section 104. Further, the antenna for card communication 110 is connected with the antenna for external communication 106 via the amplification section 108, and may exchange with the reader/writer 21 service data written in or read out from the storage section 15 of the non-contact type IC card 1A.

Further, a shield 112 may be provided in the holding section 104 in such a way as to enclose the non-contact type IC card 1A being held. The shield 112 is formed of materials that block electromagnetic wave, for example, and may separate electromagnetically the non-contact type IC card 1A held in the holding section 104 and a non-contact type IC card existing outside the card holder 100 so that they do not mutually interfere with each other.

As described above, the card holder 100 according to the first embodiment of the present invention includes the amplification section 108, and may amplify the input signal in response to the carrier signal transmitted from the reader/writer 21 and/or the input signal in response to the response signal transmitted from the non-contact type IC card 1A. By amplifying the input signal in response to the carrier signal, the card holder 100 may transmit the carrier corresponding to the signal, which is the carrier signal received by the antenna for external communication 106 amplified, to the non-contact type IC card 1A. Accordingly, the non-contact type IC card 1A may obtain a larger power from the carrier, and also, may demodulate the carrier signal with more accuracy. Further, by amplifying the input signal in response to the response signal, the card holder 100 may transmit the carrier (demagnetizing field) corresponding to the signal, which is the response signal received by the antenna for card communication 110 amplified, to the reader/writer 21. Accordingly, the reader/writer 21 may demodulate the response signal with more accuracy. Further, since the card holder 100 may amplify the signals transmitted and received between the reader/writer 21 and the non-contact type IC card 1A, even when a user moves the card holder 100 so that the communication distance or position of the antennas to each other are shifted during communication between the reader/writer 21 and the non-contact type IC card 1A, the carrier signal and the response signal may respectively be sent with more accuracy. Accordingly, with the card holder 100, the communication between the reader/writer 21 and the non-contact type IC card 1A is less likely to be disconnected.

Accordingly, by amplifying the signals transmitted and received between the reader/writer 21 and the non-contact type IC card 1A, the card holder 100 may stabilize the communication between the reader/writer and the non-contact type IC card.

Further, since the card holder 100 may stabilize the communication between the reader/writer and the non-contact type IC card, the possibility of the card holder 100 becoming burdensome to the user may be reduced compared to a card holder using a related art.

### (Second Embodiment)

Heretofore, as the card holder 100 according to the first embodiment, a configuration has been described in which the communication between the reader/writer and the non-contact type IC card is stabilized by the card holder holding one non-contact type IC card and amplifying the signals transmitted and received between the reader/writer and the non-contact type IC card. However, the card holder according to the embodiment of the present invention is not limited to be configured to hold one non-contact type IC card. Thus, a card holder according to the second embodiment according to the present invention capable of holding a plurality of non-contact type IC cards will be described next.

### (Example of Appearance of Card Holder according to Second Embodiment)

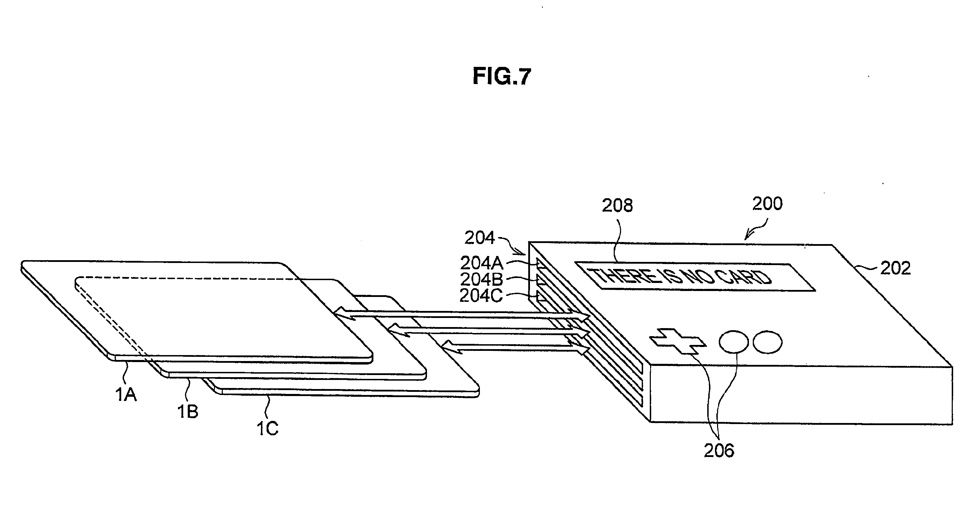

First, an appearance of a card holder according to the second embodiment will be described. FIG. 7 is an explanatory diagram showing the appearance of a card holder 200 according to the second embodiment of the present invention.

Referring to FIG. 7, the card holder 200 functions as a holding case capable of holding a plurality of non-contact type IC cards 1A, 1B and 1C (hereinafter, referred to as "non-contact type IC card(s)" 1 generically). By having a plurality of the non-contact type IC cards 1 in the card holder 200, a user can carry the plurality of the non-contact type IC cards 1 all together. Further, the non-contact type IC card 1 may have the same configuration as the non-contact type IC card 1 as shown in FIG. 2, for example.

The card holder 200 may include, for example, a housing 202 in a substantially rectangular parallelepiped shape, a holding section 204 capable of holding a plurality of non-contact type IC cards 1, an operation section 206 as a user input interface, and a display section 208 that displays holding status of a non-contact type IC card 1, various information relating to the service using the non-contact type IC card 1, and the like.

The holding section 204 may be configured from a plurality of slots 204A, 204B and 204C arranged parallel to each other on one side of the housing 202, for example. By inserting/removing (attaching/detaching) the non-contact type IC cards 1A to 1C into/from the slots 204A to 204C, the non-contact type IC cards 1 may be housed in the card holder 200 in an attachable/detachable manner.

Incidentally, although the card holder 200 as shown in FIG. 7 includes three slots 204A to 204C to be able to hold three non-contact type IC cards 1A to 1C, the card holder according to the second embodiment of the present invention is not limited to such. For example, the card holder according to the second embodiment of the present invention may include two or more than three slots and hold two or four or more non-contact type IC cards. Also, in the card holder 200 as shown in FIG. 7, the three slots 204A to 204C are of the same shape, but they are not limited to such. For example, the card holder according to the second embodiment of the present invention may be provided with slots of different shapes to handle non-contact type IC cards of various shapes and sizes.

### (Configuration Example of Card Holder 200: Outline)

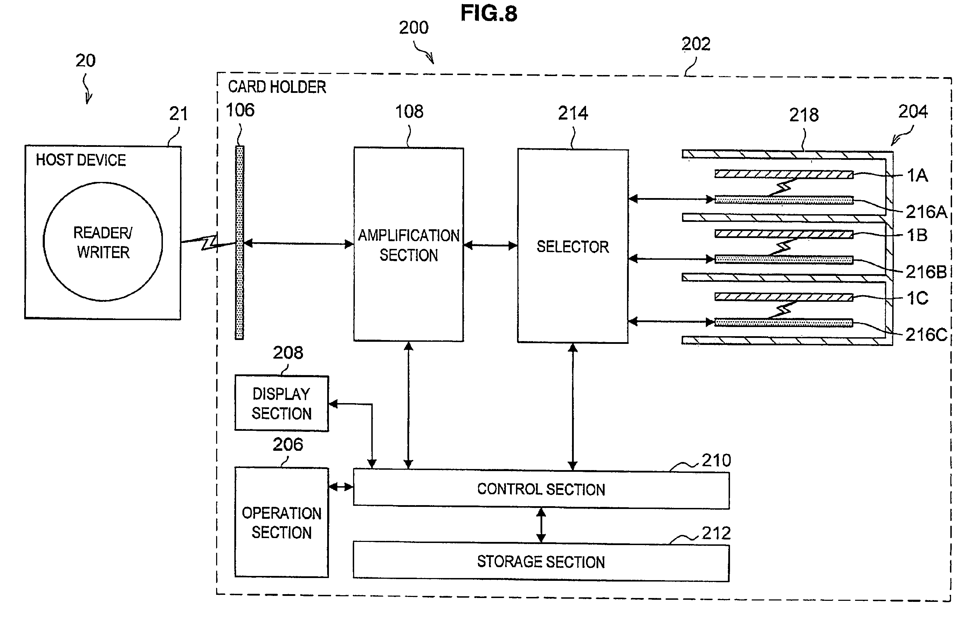

Next, the configuration of the card holder according to the second embodiment of the present invention will be described. FIG. 8 is a block diagram showing a schematic configuration example of the card holder 200 according to the second embodiment of the present invention.

Referring to FIG. 8, the card holder 200 may include a housing 202, a holding section 204, an operation section 206, a display section 208, a control section 210, a storage section 212, an antenna for external communication 106, an amplification section 108, a selector 214, antennas for card communication 216A to 216C, and a shield 218. Further, the card holder 200 may include a ROM (not shown) in which programs to be used by the control section 210 and data for control such as operation parameters are recorded, a RAM (not shown) primarily storing programs to be executed by the control section 210, and the like, and an internal power supply (not shown) such as a battery, capable of supplying power to each section such as the operation section 206, the display section 208, the control section 210, and the storage section 212.

A holding section 204 for holding a plurality of non-contact type IC cards 1 is provided inside the housing 202 of the card holder 200. The holding section 204 includes, for example, a plurality of slots 204A to 204C as shown in FIG. 7, and may stably hold the plurality (for example, three in FIG. 7) of the non-contact type IC cards 1A to 1C inserted from card insertion opening formed in the housing 202. As shown in FIG. 8, the holding section 204 is partitioned into holding areas (that is, the slots 204A to 204C) for each of the non-contact type IC cards 1. In each of the holding areas, the antennas for card communication 216A to 216C (hereinafter, referred to as "antenna(s) for card communication 216" generically) are arranged, respectively.

The antenna for card communication 216 is a communication antenna communicating contactlessly with each of the non-contact type IC cards 1 held in the holding section 204. The antenna for card communication 216 may be configured with a resonant circuit having a coil having a predetermined inductance and a capacitor having a predetermined capacitance, for example. The antennas for card communication 216 are, for example, provided for each of the slots 204A to 204C of the holding section 204, and are arranged facing each of the non-contact type IC cards 1. Accordingly, each of the antennas for card communication 216 may individually communicate contactlessly with each of the non-contact type IC cards 1 held in the holding section 204. Further, the antennas for card communication 216 are connected with the antenna for external communication 106 and the control section 210 via the selector 214, and may exchange with the reader/writer 21 or the control section 210 service data written in or read out from the storage section 15 of the non-contact type IC card 1.

Further, the shield 218 may be provided in the holding section 204 to divide the plurality of the non-contact type IC cards 1 held from each other. The shield 218 is made of material that blocks electromagnetic wave, and is shaped to individually enclose each of the non-contact type IC cards 1 held in the holding section 204, for example. With the shield 218, the plurality of the non-contact type IC cards 1 held in the holding section 204 may be separated electromagnetically so that they may not interfere with each other. Accordingly, by providing the holding section 204 with the shield 218, antenna coils of the plurality of the non-contact type IC cards 1 adjacent to each other are prevented from magnetically coupling with each other, and the influence by the electromagnetic induction and the like of the other non-contact type IC cards 1 may be eliminated. Thus, a non-contact type IC card 1 selected among the plurality of the non-contact type IC cards 1 held in the holding section 204 may suitably communicate with the reader/writer 21 without being interfered by the other non-contact type IC cards 1.

As described above, in the holding section 204, the plurality of the antennas for card communication 216 are installed that are assigned for each of the plurality of the non-contact type IC cards 1, and the shield 218 is provided that electromagnetically separates the plurality of the non-contact type IC cards 1. With this, even when the plurality of the non-contact type IC cards 1 not prepared for anti-collision are held in the holding section 204, each of the non-contact type IC cards 1 may be able to perform communication individually. Here, anti-collision is a method for processing respective cards individually when a plurality of non-contact type IC cards exist within a communication range of the reader/writer, and time-slot method and slot-marker method are known, for example.

The operation section 206 is an operation means of the card holder 200 enabling a predetermined operation by a user, and is configured with buttons, lever and the like, for example. The user may set the content of operation of the card holder 200 or input data, for example, by operating on the operation section 206.

The display section 208 is a display means included in the card holder 200, and, for example, may display various information relating to the service using the non-contact type IC card 1. For example, the display section 208 may display the holding status of a non-contact type IC card 1, the type of the non-contact type IC card 1 held in the holding section 204, or card internal information such as service data (for example, balance of the electronic value) stored in the non-contact type IC card 1. Here, the display section 208 may be an LCD, an organic EL display, and the like, but it is not limited to such. Further, the operation section 206 and the display section 208 may be made into one part like a touch screen, for example.

The control section 210 includes, for example, a demodulation circuit that demodulates based on the induced voltage generated at the antenna for external communication 106 by the carrier transmitted from the reader/writer 21, and an MPU, and may control the entire card holder 200. Further, the control section 210 may, for example, execute programs such as application program stored in the storage section 212, and may perform a predetermined calculation based on the execution of the program, command generation, control of the transmission and reception of various information, and the like. Further, the control section 210, by adopting various standards for card selection (described later), for example, may function as a card selection section automatically selecting a non-contact type IC card that responds to the communication request transmitted from the reader/writer 21 among the plurality of the non-contact type IC cards 1, that is, an appropriate card to be used for communication with the reader/writer 21 (or communication with the host device via the reader/writer). The details of the control section 210, including card selection function, will be described later.

The storage section 212 is a storage means included in the card holder 200, and may store various information. Here, the information to be stored in the storage section 212 may be various data such as application program to be executed by the control section 210, data obtained from the reader/writer 21, data obtained from each of the non-contact type IC cards 1, data to be used for selection of the non-contact type IC card 1 by the control section 210, or data processed by the control section 210, but it is not limited to such. Further, the storage section 212 may be a non-volatile memory such as an EEPROM or a flash memory, but it is not limited to such.

The antenna for external communication 106 is a communication antenna of the card holder 200 for communicating contactlessly with an external unit such as the reader/writer 21 of the host device 20. As in the case of the card holder 100 according to the first embodiment, the antenna for external communication 106 may be configured with a resonant circuit having a coil having a predetermined inductance and a capacitor having a predetermined capacitance, for example. The antenna for external communication 106 is connected with the control section 210 via the amplification section 108, and with the antenna for card communication 216 via the amplification section 108 and the selector 214.

The amplification section 108 may, with a configuration similar to that of the amplification section 108 included in the card holder 100 according to the first embodiment, amplify the signals (carrier signal and/or response signal) transmitted and received between the reader/writer 21 and the selected non-contact type IC card 1.

The selector 214 is a so-called switching circuit, and it is connected with the amplification section 108, the control section 210 and the antenna for card communication 216. The selector 214 has the function of selectively switching the non-contact type IC card 1 to be used for the communication with the reader/writer 21. Specifically, the selector 214, based on instruction (switching command) from the control section 210, connects the antenna for card communication 216 assigned for the non-contact type IC card 1 selected among the plurality of the non-contact type IC cards 1 held in the holding section 204 with the antenna for external communication 106 via the amplification section 108 in a communicable manner. For example, when a non-contact type IC card 1A is selected by the control section 210, the selector 214 connects an antenna for card communication 216A with the amplification section 108.
Thus, it is made possible for the non-contact type IC card 1A to communicate contactlessly with the reader/writer 21 via the antenna for card communication 216A, the selector 214, the amplification section 108, and the antenna for external communication 106. Accordingly, the non-contact type IC card 1 held in the card holder 200 may communicate with the reader/writer 21 via the antenna for card communication 216 assigned for itself and the antenna for external communication 106 shared by all the cards.

By the configuration as shown in FIG. 8, for example, the card holder 200 according to the second embodiment of the present invention may select a desired non-contact type IC card among the plurality of the non-contact type IC cards carried together, and may make it communicate with the external unit. Further, by including the amplification section 108, similarly to the card holder 100 according to the first embodiment, the card holder 200 may amplify the signals (carrier signal and/or response signal) transmitted and received between the reader/writer 21 and the non-contact type IC card 1. Next, card selection function of the card holder 200 will be described in detail.

### (Configuration Example of Card Holder 200: Details)

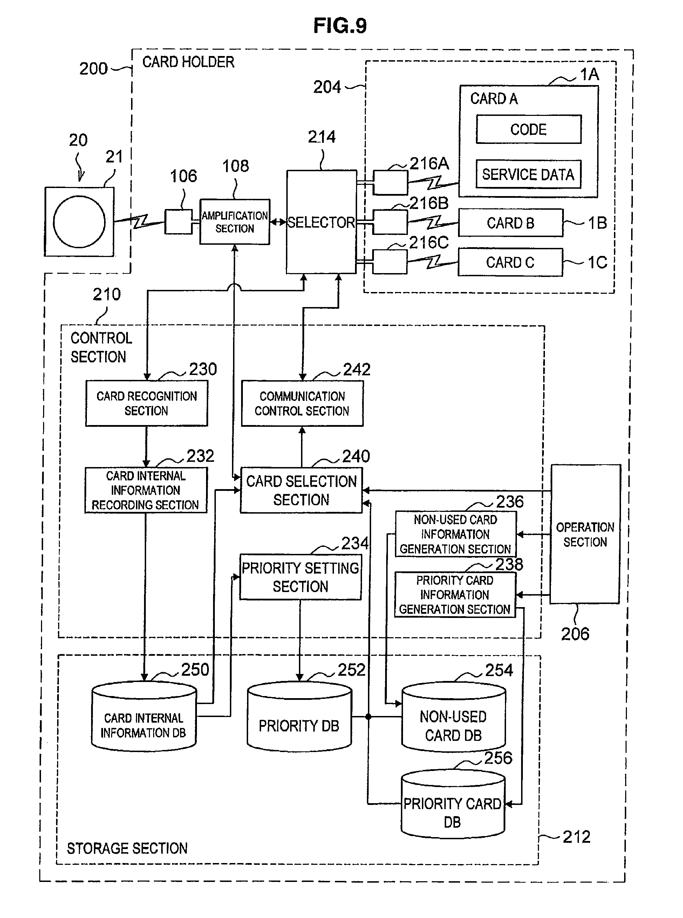

FIG. 9 is a block diagram showing a configuration example of the card holder 200 according to the second embodiment of the present invention. Incidentally, although FIG. 9 shows the card holder 200 as shown in FIG. 8, some of the components shown in FIG. 8 are simplified or not shown in FIG. 9. Further, in the following, as for the components described by referring to FIG. 8, the description will be omitted.

Referring to FIG. 9, the control section 210 may include a card recognition section 230, a card internal information recording section 232, a priority setting section 234, a non-used card information generation section 236, a priority card information generation section 238, a card selection section 240, and a communication control section 242. Further, the storage section 212 may store a card internal information database 250, a priority database 252, a non-used card database 254, and a priority card database 256. In the following, each of the sections will be described in detail.

The card recognition section 230 may recognize the non-contact type IC card 1 held in the holding section 204 of the card holder 200. Specifically, for example, by detecting insertion of the non-contact type IC cards 1A to 1C into each of the slots 204A to 204C of the holding section 204, or removal of the non-contact type IC cards 1A to 1C from each of the slots 204A to 204C, the card recognition section 230 may recognize whether the non-contact type IC cards 1 are held or not in each of the slots 204A to 204C.

Further, the card recognition section 230 may read out identification information such as code (service code, system code, etc.) and card ID from the non-contact type IC cards 1 held in the slots 204A to 204C of the holding section 204. Here, the code is information indicating the type of service the non-contact type IC card 1 relates to, that is, the type of the non-contact type IC card 1. The card recognition section 230 may judge, by the code stored in each of the non-contact type IC cards 1, whether the plurality of the non-contact type IC cards 1 are of similar type or of dissimilar type. As such, by the card recognition section 230 recognizing in advance the non-contact type IC cards 1 held in the holding section 204, it becomes possible, as follows, to select the non-contact type IC card 1 to be used for the communication with the reader/writer 21.

The card internal information recording section 232, based on the various information read out by the card recognition section 230, records or updates in the storage section 212 information relating to the non-contact type IC card 1 held in the holding section 204 (hereinafter referred to as "card information"). Here, FIG. 9 shows a configuration where the card internal information recording section 232 records (registers)/updates the card information in the card internal information DB 250 (DataBase). However, the storage means for card information in the storage section 212 is not limited to a DB format. For example, the card internal information recording section 232 may record in the storage section 212 the card information corresponding to each of the non-contact type IC cards 1 as a file. Further, the card information may be code or identification information, for example, but it is not limited to such.

Further, the card internal information recording section 232 records the card information of the non-contact type IC card 1 held in the holding section 204 (or re-creates the card internal information DB 250) with the turning on of power of the card holder 200 or the insertion/removal of the non-contact type IC card as a trigger. Here, the card holder 200 may determine whether the power is turned on, by, for example, the card recognition section 230 detecting operation signal corresponding to the operation by the operation section 206. Further, the card holder 200 may determine whether the non-contact type IC card is inserted into/removed from each of the slots 204A to 204C, by, for example, the card recognition section 230 detecting a detection signal from a card insertion detection sensor provided for each of the slots 204A to 204C of the holding section 204. Incidentally, it is needles to say that the trigger for recording card information according to the embodiment of the present invention is not limited to be as such. For example, the card holder 200 may record card information periodically after the turning on of power.

The priority setting section 234 sets the priority of the non-contact type IC cards 1 to be used for communication with the reader/writer 21 for each service based on card information, stored in the storage section 212 (stored in the card internal information DB 250), of each of the non-contact type IC cards 1 held in the holding section 204. For example, the priority setting section 234 determines whether a plurality of non-contact type IC cards relating to similar service exist or not based on code (for example, service code) included in the card information. Here, if it is determined that a plurality of non-contact type IC cards relating to similar service do not exist, the priority setting section 234 sets high priority for each of the non-contact type IC cards relating to each service, for example. Further, if it is determined that a plurality of non-contact type IC cards relating to similar service do exist, the priority setting section 234 sets the priority for each of the non-contact type IC cards relating to the service based on the codes of the respective non-contact type IC cards, for example. For example, when a service for which a plurality of the non-contact type IC cards exist is a service relating to public transportation, the priority setting section 234 may set higher priority for a non-contact type IC card for public transportation having the function as a commuter pass than a non-contact type IC card for public transportation in which value of electronic money is recorded.

Further, the priority setting section 234 may record the priority set for each service in the priority DB 252, for example.

The non-used card information generation section 236 generates a non-used card information indicating a non-used card, and records the information, for example, in the non-used card DB 254 of the storage section 212. Here, when a user of the card holder 200 specifies, by using the operation section 206, a non-contact type IC card that is not to be used for communication with the reader/writer 21 (a non-used card) among the plurality of the non-contact type IC cards 1 held in the card holder 200, the non-used card information generation section 236 may generate non-used card information and store the information in the storage section 212.

The priority card information generation section 238 generates priority card information indicating a priority card, and records the information, for example, in the priority card DB 256 of the storage section 212. Here, by a user of the card holder 200 specifying, by using the operation section 206, a non-contact type IC card that is to be used preferentially (a priority card) when communicating with the reader/writer 21 among the plurality of the non-contact type IC cards 1 held in the card holder 200, the priority card information generation section 238 may generate the priority card information and may store the information in the storage section 212.

The card selection section 240 selects a non-contact type IC card to be used for communication with the reader/writer 21 among the non-contact type IC cards 1 held in the holding section 204. The card selection section 240 may perform a card selection process when, for example, a communication request (request command, for example) relating to a predetermined service is received from the reader/ writer 21 of the host device 20 via the antenna for external communication 106 and the amplification section 108 (for example, at the moment of starting the transaction between the reader/writer 21 and the card holder 200). Incidentally, when there is only one non-contact type IC card 1 held in the holding section 204, the card selection section 240 may select the non-contact type IC card in advance. Further, although a configuration in which the card selection section 240 receives a communication request via the amplification section 108 is shown in FIG. 9, the card holder according to the second embodiment of the present invention is not limited to be configured as such, and it is needless to say that the card selection section 240 may receive the communication request that is received by the antenna for external communication 106 without the amplification section 108 in-between.

Here, the card selection section 240 may select a non-contact type IC card to be used for communication with the reader/writer 21 with the following procedures, for example.

### (a) Selection using Card Information

The card selection section 240 selects, using card information, non-contact type IC cards corresponding to code (system code, service code indicating the service provided by the host device 20, for example) included in the communication request relating to a predetermined service transmitted from the reader/writer 21.

### (b) Selection based on Other Selection Standards

The card selection section 240 selects a non-contact type IC card among the non-contact type IC cards selected in the above described (a) by sequentially applying other selection standards. The other selection standards of (b) may be the following (b-1) to (b-3), for example.

### (b-1) Selection based on Information of Set Priority

The card selection section 240, for example, reads out information of priority from the priority DB 252, and selects a non-contact type IC card 1 with high priority indicated by the information of priority. With a non-contact type IC card 1 with high priority selected, in case a plurality of non-contact type IC cards 1 for public transportation are held in the holding section 204, for example, a non-contact type IC card having the function of a commuter pass (non-contact type IC card with high priority) is automatically selected, and the non-contact type IC card may be used.

### (b-2) Selection based on Non-Used Card Information

The card selection section 240, for example, reads out non-used card information from the non-used card DB 254, and selects a non-contact type IC card 1 by excluding from the selection option the non-contact type IC card 1 indicated by the non-used card information. By excluding the non-contact type IC card 1 indicated by the non-used card information from the selection option, the card holder 200 is prevented from automatically selecting a non-contact type IC card 1 that a user does not desire to use, and the non-contact type IC card 1 may be prevented from being used, for example.

### (b-3) Selection based on Priority Card Information

The card selection section 240, for example, reads out priority card information from the priority card DB 256, and selects a non-contact type IC card 1 indicated by the priority card information. By selecting the non-contact type IC card 1 indicated by the priority card information, the card holder 200 may automatically select a non-contact type IC card 1 that a user desires to use, and the non-contact type IC card may be used, for example.

By performing the selections as indicated by the above (b-1) to (b-3), for example, the card selection section 240 may select a non-contact type IC card. Incidentally, the other selection standards according to the second embodiment of the present invention are not limited to the above (b-1) to (b-3). For example, the card holder 200 may select a non-contact type IC card to be used for communication with the reader/writer 21 based on information of the current location of the card holder 200 (that is, the location of service provision where communication with the reader/writer 21 is performed) calculated using a positioning system (not shown) such as a GPS (Global Positioning System).

The card selection section 240 may select a non-contact type IC card to be used for communication with the reader/writer 21 based on the above (a) or the above (a) and (b), for example.

Further, the card selection section 240 may have, besides the automatic selection functions as described above, a manual selection function. Here, the manual selection function of the card selection section 240 is a function of selecting a non-contact type IC card 1 to be used for communication with the reader/writer 21 when the non-contact type IC card 1 is selected by the user using the operation section 206. The card holder 200 may be set, by user input, for example, to either of automatic selection mode where the card holder 200 automatically selects a card or manual selection mode where a user selects a card manually.

The communication control section 242 controls the selector 214 based on result of the card selection in the card selection section 240. With the communication control section 242 controlling the selector 214, the non-contact type IC card 1 selected by the card selection section 240 and the reader/writer 21 of the host device 20 may be connected with each other in a communicable manner via the antenna for external communication 106, the amplification section 108 and the antenna for card communication 216. For example, if the non-contact type IC card 1A is selected among the non-contact type IC cards 1A to 1C by the card selection section 240, the communication control section 242 instructs the selector 214 to connect the antenna for card communication 216A and the amplification section 108. In response to this, the selector 214 connects the non-contact type IC card 1A with the antenna for card communication 216A and the amplification section 108, and with the reader/writer 21 in a communicable manner via the antenna for external communication 106. As a result, as described by referring to FIG. 2, the non-contact type IC card 1A and the reader/writer 21 may transmit and receive between each other various command and data relating to a predetermined service.

As described above, the communication control section 242 may connect only the non-contact type IC card 1 selected by the card selection section 240 among the plurality of the non-contact type IC cards 1 held in the holding section 204 with the reader/writer 21 in a communicable manner. Thus, even when non-contact type IC cards 1 of similar types that are not prepared for anti-collision are held in the card holder 200, it can be prevented from being incommunicable because of the plurality of the non-contact type IC cards 1 responding simultaneously to the communication request from the reader/writer 21. Accordingly, even when the plurality of the non-contact type IC cards 1 in the card holder 200 exist simultaneously within the communication range of the reader/writer 21, with only the appropriate non-contact type IC card 1 communicating with the reader/writer 21, a service desired by a user may be realized.

As described above, the card holder 200 according to the second embodiment of the present invention includes the amplification section 108, and may amplify the input signal in response to the carrier signal transmitted from the reader/writer 21 and/or the input signal in response to the response signal transmitted from the selected non-contact type IC card 1, similarly to the card holder 100 according to the first embodiment. By amplifying the input signal in response to the carrier signal, the card holder 200 may transmit a carrier corresponding to the signal, which is the carrier signal received by the antenna for external communication 106 amplified, to the selected non-contact type IC card 1, similarly to the card holder 100 according to the first embodiment.
Accordingly, the non-contact type IC card 1 may obtain a larger power from the carrier, and also, may demodulate the carrier signal with more accuracy. Further, by amplifying the input signal in response to the response signal, the card holder 200 may transmit a carrier (demagnetizing field) corresponding to the signal, which is the response signal received by the antenna for card communication 216 assigned for the selected non-contact type IC card 1 amplified, to the reader/writer 21. Accordingly, the reader/writer 21 may demodulate the response signal with more accuracy. Further, the card holder 200 may amplify the signals transmitted and received between the reader/writer 21 and the selected non-contact type IC card 1, similarly to the card holder 100 according to the first embodiment, the communication between the reader/writer 21 and the non-contact type IC card 1A is less likely to be disconnected.

Accordingly, by amplifying the signals transmitted and received between the reader/writer 21 and the selected non-contact type IC card 1, the card holder 200 may stabilize the communication between the reader/writer and the non-contact type IC card.

Further, since the card holder 200 may stabilize the communication between the reader/writer 21 and the non-contact type IC card 1, similarly to the card holder 100 according to the first embodiment, the possibility of the card holder 200 becoming burdensome to the user may be reduced compared to a card holder using a related art.

Further, the card holder 200 reads out card information from the non-contact type IC card 1 held in the holding section 204 and records it in the storage section 212 when, for example, power is turned on or attaching/detaching of the non-contact type IC card 1 is performed. Further, the card holder 200 may automatically select a non-contact type IC card to be used for communication with the reader/writer 21 and may connect the selected non-contact type IC card with the reader/writer 21 in a communicable manner, by, for example, using codes included in both card information (or card information and other standards) and a communication request relating to a predetermined service transmitted from the reader/writer 21. Accordingly, even when non-contact type IC cards 1 of similar types that are not prepared for anti-collision are held in the card holder 200, the plurality of the non-contact type IC cards 1 may be prevented from responding simultaneously to the communication request from the reader/writer 21.

Further, the card holder 200 may set a non-contact type IC card not to be used or a non-contact type IC card to be used preferentially according to a user input, for example. Since the card holder 200 may automatically select a non-contact type IC card to be used for communication with the reader/writer 21 based on the setting in accordance with the user input, it is possible to realize a variety of services using a non-contact type IC card desired by the user to be used.

### (Modification Example of Card Holder 200 according to Second Embodiment)

For the card holder 200 as shown in FIG. 8, a configuration is shown where the card holder 200 includes an amplification section 108 that is similar to that of the card holder 100 according to the first embodiment, and amplifies the amplitude of the signals transmitted and received between the reader/writer 21 and the selected non-contact type IC 1 to a predetermined set value. However, the card holder according to the second embodiment of the present invention is not limited to be configured as such. For example, the card holder according to the second embodiment of the present invention may change the amplification factor in accordance with the type of the non-contact type IC card selected among the non-contact type IC cards held in the holding section.

The card holder according to the modification example of the second embodiment may change the amplification factor in accordance with the selected non-contact type IC card by, for example, the following processes: (1) the card selection section selecting a non-contact type IC card among the non-contact type IC cards held in the holding section, (2) the card selection section sending a command to change the amplification factor in accordance with the identification information of the selected non-contact type IC card to the amplification section, (3) the amplification section changing the amplification factor in accordance with the command to change the amplification factor that is sent and amplifying a signal. Incidentally, although the changing of amplification in the above (2) may be realized by the amplification section including a multistage amplifier and switches for switching the number of stages, and the switching in accordance with the command to change the amplification factor performed, it is needless to say that the means of realization is not limited to such.

### (Third Embodiment)

Heretofore, as the card holder according to the embodiment of the present invention capable of holding a plurality of non-contact type IC cards, a configuration has been described in which the communication between the reader/writer and the non-contact type IC card is stabilized by selecting a non-contact type IC card for communicating with the reader/writer and amplifying the signals transmitted and received between the reader/writer and the non-contact type IC card (the card holder 200 according to the second embodiment). However, the card holder according to the embodiment of the present invention capable of holding a plurality of non-contact type IC cards is not limited to be configured as such. Thus, a card holder according to another embodiment capable of holding a plurality of non-contact type IC cards will be described next.

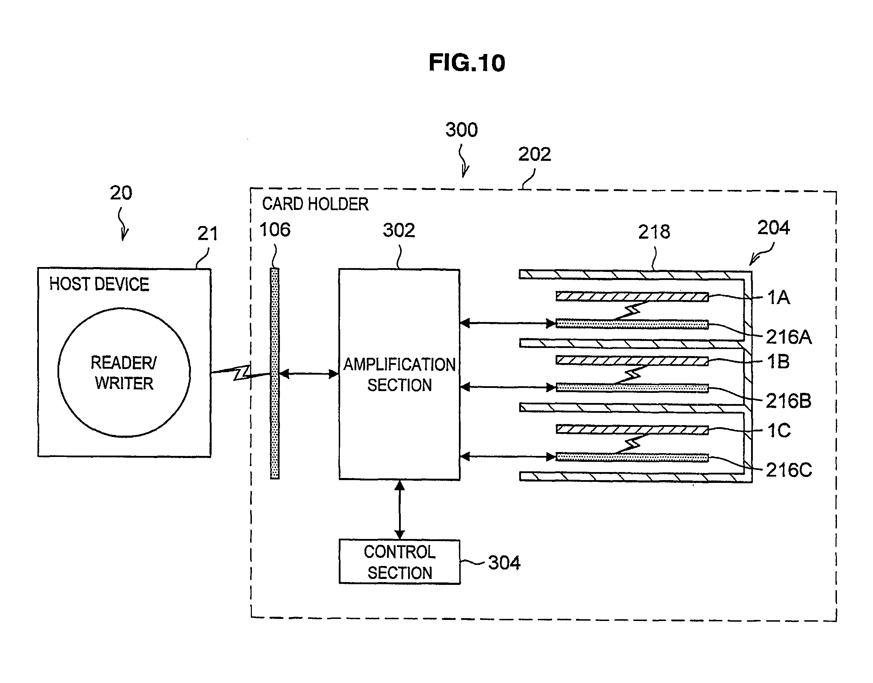

FIG. 10 is a block diagram showing a configuration example of a card holder 300 according to the third embodiment of the present invention.

Referring to FIG. 10, the card holder 300 may include a housing 202, a holding section 204, an amplification section 302, a control section 304, an antenna for external communication 106, antennas for card communication 216A to 216C, and a shield 218. Further, the card holder 300 may include a ROM (not shown) in which programs to be used by the control section 304 and data for control such as operation parameters are recorded, a RAM (not shown) primarily storing programs to be executed by the control section 304, and the like, an operation section (not shown) which a user can use for eject operation for ejecting a non-contact type IC card, a display section (not shown) capable of displaying the holding status of a non-contact type IC card 1, and an internal power supply (not shown) such as a battery, capable of supplying power to each section such as the control section 304, the operation section (not shown), and the display section (not shown).

The housing 202, the holding section 204, the antenna for external communication 106, antennas for card communication 216A to 216C, and the shield 218 may have the same configurations and functions as those of the card holder 200 according to the second embodiment as shown in FIG. 8.

The amplification section 302 amplifies the input signal, in response to the carrier signal, sent from the antenna for external communication 106 by the amplification factor in accordance with the number of non-contact type IC cards 1 held in the holding section 204. Then, the amplification section 302 divides the amplified signal in accordance with the number of the non-contact type IC cards 1 held in the holding section 204 (that is, the signal is not divided when there is only one non-contact type IC card held in the holding section 204) and sends the signal to each of the antennas for card communication 216 assigned for the non-contact type IC cards 1 held in the holding section 204. Accordingly, each of the antennas for card communication 216 assigned for the non-contact type IC cards 1 held in the holding section 204 may transmit a carrier corresponding to the signal, which is the carrier signal received by the antenna for external communication 106 amplified, to the non-contact type IC card 1A. Further, since the amplification section 302 may divide the amplified signal in accordance with the number of non-contact type 1C cards 1 held in the holding section 204, a signal whose gain is excessively large may be prevented from being sent to the non-contact type IC card 1.

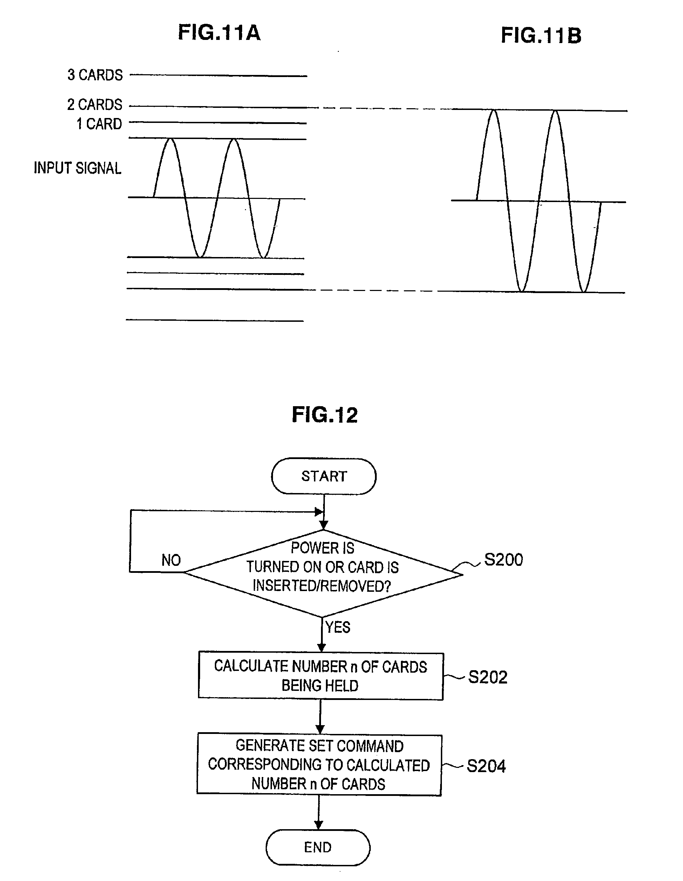

FIGS. 11A and 11B are explanatory diagrams showing the outline of amplification in the amplification section 302 according to the third embodiment of the present invention. FIG. 11A shows an example of an input signal corresponding to the carrier signal received by the antenna for external communication 106, and FIG. 11B shows an example of an amplified signal that is output from the amplification section 302.

As shown in FIGS. 11A and 11B, the amplification section 302 according to the third embodiment of the present invention may amplify the amplitude of an input signal in response to the carrier signal to a predetermined set value in accordance with the number of non-contact type IC cards 1 held in the holding section 204. Here, FIG. 11A shows a predetermined set value for each case where one to three non-contact type IC cards 1 are held, and FIG. 11B shows the amplified signal in a case where two non-contact type IC cards 1 are held in the holding section 204. Here, the amplification section 302 may be configured with a comparator, a multistage amplifier, switches for switching the number of stages, and the like. Further, the amplification section 302 may change the amplification factor in accordance with the number of the non-contact type IC cards 1 held in the holding section 204 as shown in FIGS. 11A and 11B in accordance with a set command from the control section 304. The amplification method of the amplification section 302 according to the third embodiment of the present invention will be described later.

Further, the amplification section 302 may amplify each of the input signals, in accordance with response signals, generated by the antennas for card communication 216 assigned for each of the non-contact type IC cards 1 held in the holding section 204 in accordance with the response signals transmitted from the non-contact type IC cards, and may send the signals to the antenna for external communication 106. Here, the amplification section 302 may amplify the input signal in response to the response signal by the method as shown in FIG. 6 (the method similar to that of the amplification section 108 according to the first embodiment), for example. With the amplification section 302 amplifying the input signal in response to the response signal, the antenna for external communication 106 may transmit a carrier (demagnetizing field) corresponding to the signal, which is the response signal received by the antenna for card communication 110 amplified, to the reader/writer 21.

Incidentally, the amplification section 302 according to the third embodiment of the present invention is not limited to be configured to amplify each of the input signal in response to the carrier signal and the input signal in response to the response signal. It is needless to say that the amplification section 302 may amplify one of the input signal in response to the carrier signal and the input signal in response to the response signal.

The control section 304 is configured with an MPU, for example, and may control the entire card holder 300. Further, the control section 304 may operate according to the programs stored in a ROM (not shown), for example, and may execute a predetermined calculation, command generation, and the like. For example, the control section 304 may calculate the number of non-contact type IC cards 1 held in the holding section 204, and may send a set command in accordance with the calculated number of non-contact type IC cards 1 to the amplification section 302.

### (Set Command Generation Method)

Here, an example of a generation method for set command of the control section 304 is shown. FIG. 12 is a flow chart showing an example of a set command generation method of the control section 304 according to the third embodiment of the present invention.

First, the control section 304 determines whether the power of the card holder 300 is turned on, or whether a non-contact type IC card is inserted/removed or not (step S200). Here, the card holder 300 may determine whether the power is turned on, by, for example, the control section 304 detecting operation signal corresponding to the operation by the operation section (not shown). Further, the control section 304 may determine whether the non-contact type IC card is inserted into/removed from each of the slots 204A to 204C, by, for example, detecting a detection signal from a card insertion detection sensor provided for each of the slots 204A to 204C of the holding section 204. Incidentally, it is needless to say that determination means at step S200 is not limited to be above.

When it is not determined in step S200 that the power is turned on or the non-contact type IC card is inserted or removed, the control section 304 does not proceed with the set command generation method.

Further, when it is determined in step S200 that the power is turned on or the non-contact type IC card is inserted or removed, the control section 304 calculates the number n (n is a natural number) of the non-contact type IC card 1 held in the holding section 204 (step S202). The calculation in step S202 may be performed by the control section 304 counting, among the detection signals from the card insertion detection sensor provided for each of the slots 204A to 204C of the holding section 204, the number of signals indicating that the cards are inserted. However, it is not limited to such.

When the number n of the non-contact type IC card 1 is calculated in step S202, the control section 304 generates a set command in accordance with the calculated number n and sends it to the amplification section 302 (step S204). Here, the control section 304 may generate a set command expressed in a digital signal of a predetermined bit to control each of the switches provided in the amplification section 302 to change the amplification factor, for example. However, it is needless to say that the set command according to the third embodiment of the present invention is not limited to such. Further, in case where the amplification section 302 includes a comparator, to change the reference voltage in the comparator in accordance with the calculated number n, the control section 304 may send the set command also to the internal power supply (not shown) supplying the reference voltage, for example.

By using the set command generation method as shown in FIG. 12, for example, the control section 304 may calculate the number of the non-contact type IC cards 1 held in the holding section 204 and may send a set command in accordance with the calculated number of the non-contact type IC cards 1 to the amplification section 302.

### (Amplification Method for Input Signal in Response to Carrier Signal according to Third Embodiment)

Next, the amplification method for the input signal in response to the carrier signal of the amplification section 302 according to the third embodiment of the present invention will be described. Incidentally, in the following, the description will be made with the number of the non-contact type IC card 1 held in the holding section 204 as n.

### (First Example of Amplification Method according to Third Embodiment)

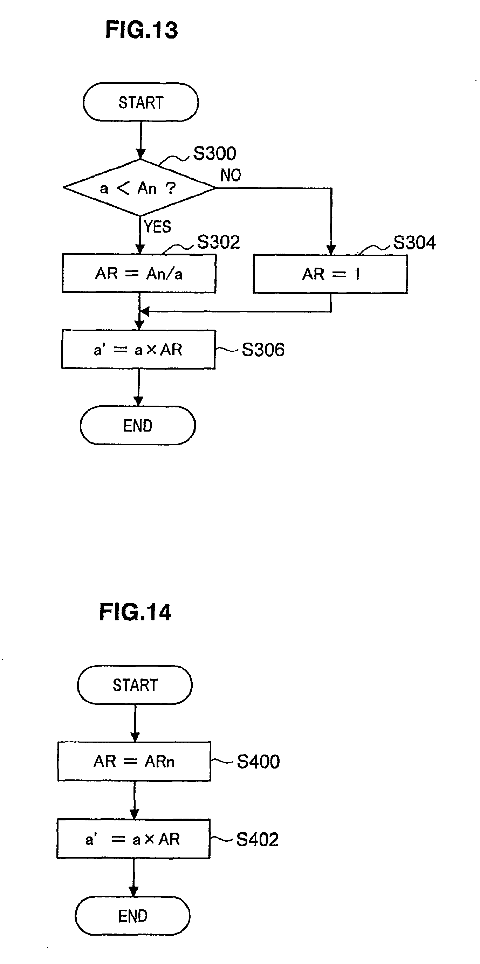

FIG. 13 is a flow chart showing a first example of the amplification method of the amplification section 302 according to the third embodiment of the present invention.

The amplification section 302 determines whether an input amplitude a is smaller than a set amplitude An or not (step S300). Here, as shown in FIGS. 11A and 11B, the set amplitude An is set in accordance with the number of the non-contact type IC cards 1 held in the holding section 204.

When it is determined that the input amplitude a is smaller than the set amplitude An in step S300, the amplification section 302 sets the amplification factor to "AR = An/a" (step S302).

When it is determined that the input amplitude a is larger than the set amplitude An in step S300, the amplification section 302 sets the amplification factor AR to "AR = 1" (i.e., no amplification) (step S304).

The amplification section 302 amplifies the input signal based on the amplification factor AR set in step S302 or step S304 (step S306). Here, the output amplitude a' may be expressed as "a' = a x AR".

By using the method as shown in FIG. 13, for example, the amplification section 302 may amplify the amplitude of the input signal in response to the carrier signal to a predetermined set value in accordance with the number of the non-contact type IC cards 1 held in the holding section 204. Here, the amplification section 302 may perform amplification using the method as shown in FIG. 13 by including a comparator, a multistage amplifier and switches for switching the number of stages. However, it is needless to say that the configuration of the amplification section 302 according to the third embodiment of the present invention for using the method as shown in FIG. 13 is not limited to the above. Further, the reference voltage to be input to the comparator may be supplied from an internal power supply (not shown) with the magnitude in accordance with the set command generated by the control section 304, for example.

### (Modification Example of First Example of Amplification Method according to Third Embodiment)

Incidentally, in the first example of the amplification method according to the third embodiment as shown in FIG. 13, a method of setting the amplification factor AR to 1 when the input amplitude a is larger than the set amplitude An (step S304) is described. However, the first example of the amplification method of the amplification section 302 according to the third embodiment is not limited to such method. For example, the amplification section 302 may include a plurality of AGC circuits, each corresponding to respective numbers of the non-contact type IC cards that may be held in the holding section, and a switch for switching to the AGC circuit to be used, thereby adjusting the amplification factor to obtain a fixed output in accordance with the number of the non-contact type IC cards 1 held in the holding section 204.

### (Second Example of Amplification Method according to Third Embodiment)

In the first example and the modification example of the amplification method according to the third embodiment as shown in FIG. 13, methods are described in which it is determined whether an input amplitude a is smaller than a set amplitude An or not (step S300) and the process is branched off according to the result of the determination. However, the amplification method for an input signal in response to a carrier signal according to the third embodiment of the present invention is not limited to such method where the determination as described above is needed.

FIG. 14 is a flow chart showing a second example of the amplification method of the amplification section 302 according to the third embodiment of the present invention.

The amplification section 302 sets the amplification factor AR to "AR = ARn" (step S400). The amplification section 300 may set the amplification factor in step S400 whenever a set command is sent from the control section 304, for example.

The amplification section 302 amplifies the input signal based on the amplification factor AR set in step S400 (step S402). Here, the output amplitude a' may be expressed as "a' = a x AR".

By using the method as shown in FIG. 14, for example, the amplification section 302 may amplify the amplitude of the input signal in response to the carrier signal by the amplification factor in accordance with the number of the non-contact type IC card 1 held in the holding section 204 independent of the magnitude of the amplitude of the input signal. Here, the amplification section 302 may perform amplification using the method as shown in FIG. 14 by including a multistage amplifier and switches for switching the number of stages, for example. However, it is needless to say that the configuration of the amplification section 302 according to the third embodiment of the present invention for using the method as shown in FIG. 14 is not limited to the above.

### (Amplification Method for Input Signal in Response to Response Signal according to Third Embodiment)

The amplification section 302 may amplify the amplitude of the input signal in response to the response signal to a predetermined set value by using the method as shown in FIG. 6, similarly to the amplification section 108 according to the first embodiment.

As descried above, the card holder 300 according to the third embodiment of the present invention includes the amplification 302, and may amplify the input signal in response to the carrier signal transmitted from the reader/writer 21 and/or the input signal in response to the response signal transmitted from each of the non-contact type IC cards 1 held in the holding section 204. Here, the amplification section 302 amplifies the input signal in response to the carrier signal transmitted from the reader/writer 21 to a predetermined set value in accordance with the number of the non-contact type IC cards 1 held in the holding section 204, and sends the signal to each of the antennas for card communication 216 assigned for the non-contact type IC cards 1 held in the holding section 204. Thus, the card holder 300 may transmit a carrier corresponding to the signal, which is the carrier signal received by the antenna for external communication 106 amplified, to the non-contact type IC card 1. Accordingly, each of the non-contact type IC cards 1 held in the holding section 204 may obtain a larger power from the carrier, and also, may demodulate the carrier signal with more accuracy. Further, with the amplification section 302 amplifying the response signal transmitted from each of the non-contact type IC cards 1 held in the holding section 204, the card holder 300 may transmit carriers (demagnetizing fields) corresponding to signals, which are the response signals received by the antennas for card communication 216 assigned for each of the non-contact type IC cards 1 held in the holding section 204 amplified, to the reader/writer 21, respectively. Accordingly, the reader/writer 21 may demodulate the response signal with more accuracy. Further, since the card holder 300 may amplify the signals transmitted and received between the reader/writer 21 and each of the non-contact type IC cards 1 held in the holding section 204, even when a user moves the card holder 300 and the communication distance or position of the antennas to each other are shifted during communication between the reader/writer 21 and each of the non-contact type IC cards 1, the carrier signal and the response signal may respectively be sent with more accuracy. Accordingly, with the card holder 300, the communication between the reader/writer 21 and each of the non-contact type IC cards 1 is less likely to be disconnected.

Accordingly, by amplifying the signals transmitted and received between the reader/writer 21 and each of the non-contact type IC cards 1 held in the holding section 204, the card holder 300 may stabilize the communication between the reader/writer and the non-contact type IC card.

Further, since the card holder 300 may stabilize the communication between the reader/writer and the non-contact type IC card, the possibility of the card holder 300 becoming burdensome to the user may be reduced compared to a card holder using a related art, similarly to the card holder 100 according to the first embodiment.

### (Program according to Third Embodiment)

With a program for making a computer function as the card holder 300 according to the third embodiment, the amplification factor in the amplification section 302 may be changed in accordance with the number of non-contact type IC cards 1 held in the holding section 204.

Heretofore, a card holder has been described as the first to third embodiments of the present invention. However, the embodiments of the present invention are not limited to such. For example, the embodiment of the present invention may be applied to a mobile communication device such as a cell phone that holds a non-contact IC chip, a computer such as an UMPC (Ultra Mobile Personal Computer) that holds a non-contact IC chip, and electronic wallet device capable of holding a non-contact type IC card, and the like.

It should be understood by those skilled in the art that various modifications, combinations, sub-combinations and alterations may occur depending on design requirements and other factors insofar as they are within the scope of the appended claims or the equivalents thereof.

For example, for the card holder according to the first and second embodiments, a configuration is shown where the amplitude of an input signal is amplified to a predetermined set value, as shown in FIGS. 5A and 5B. However, the embodiment of the present invention is not limited to such configuration. For example, the card holder according to the embodiment of the present invention may include an operational amplifier with a fixed amplification factor, and amplify an input signal with the fixed amplification factor. With such configuration, the communication between a reader/writer and a non-contact type IC card may be stabilized, similarly to the card holder according to the first and second embodiments.

The configuration as described above is an example of the embodiment of the present invention, and thus is within the technical scope of the present invention.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A card holder, comprising:
a holding section holding, in an attachable/detachable manner, a plurality of non-contact type IC cards capable of non-contact communication with an external unit;
an antenna for external communication communicating contactlessly with the external unit;
an antenna for card communication communicating contactlessly with each of the plurality of the non-contact type IC cards held in the holding section; and
an amplification section amplifying each of a carrier signal transmitted from the external unit and received by the antenna for external communication and a response signal to the carrier signal, transmitted from each of the plurality of the non-contact type IC cards and received by the antenna for card communication.

2. The card holder according to claim 1, wherein
the amplification section amplifies the carrier signal to a predetermined value in accordance with the number of the non-contact type IC cards held in the holding section by changing an amplification factor based on the number of the non-contact type IC cards held in the holding section and amplitude of the inputted carrier signal.

3. The card holder according to claim 2, further comprising:
a control section setting a predetermined value in the amplification section in accordance with the number of the non-contact type IC cards in accordance with attaching/detaching of the non-contact type IC cards in the holding section.

4. The card holder according to claim 1, wherein
the amplification section amplifies the response signal to a predetermined value by changing an amplification factor in accordance with amplitude of the inputted response signal.

5. A card holder, comprising:
a holding section holding, in an attachable/detachable manner, a non-contact type IC card capable of non-contact communication with an external unit;
an antenna for external communication communicating contactlessly with the external unit;
an antenna for card communication communicating contactlessly with the non-contact type IC card held in the holding section; and
an amplification section amplifying each of a carrier signal received by the antenna for external communication and transmitted from the external unit, and a response signal, to the carrier signal, transmitted from the non-contact type IC card and received by the antenna for card communication.

6. The card holder according to claim 5, wherein
the amplification section amplifies the carrier signal to a predetermined value by changing an amplification factor in accordance with amplitude of the inputted carrier signal, and
amplifies the response signal to a predetermined value by changing an amplification factor in accordance with amplitude of the inputted response signal.

7. A card holder, comprising:
a holding section holding, in an attachable/detachable manner, a plurality of non-contact type IC cards capable of non-contact communication with an external unit;
an antenna for external communication communicating contactlessly with the external unit;
an antenna for card communication communicating contactlessly with the plurality of the non-contact type IC cards held in the holding section;
a storage section capable of storing codes relating to services each of the non-contact type IC cards held in the holding section relates to;
a control section selecting a non-contact type IC card to be used for communication with the external unit based on code included in a carrier signal transmitted from the external unit indicating a predetermined service and code stored in the storage section, and connecting the selected non-contact type IC card and the external unit in a communicable manner via the antenna for external communication and the antenna for card communication; and
an amplification section amplifying each of the carrier signal received by the antenna for external communication and a response signal, to the carrier signal, transmitted from the non-contact type IC card and received by the antenna for card communication.

8. A communication method for a card holder including a holding section capable of holding a non-contact type IC card capable of non-contact communication with an external unit, an antenna for external communication communicating contactlessly with the external unit, and an antenna for card communication communicating contactlessly with the non-contact type IC card, comprising:
amplifying step of amplifying amplitude of a carrier signal to a predetermined value when the carrier signal transmitted from the external unit is received; and
transmitting step of transmitting the carrier signal amplified in the amplifying step of amplifying amplitude of the carrier signal to a predetermined value to the non-contact type IC card.

9. The communication method according to claim 8, further comprising:
amplifying step of amplifying amplitude of a response signal to a predetermined value when the response signal transmitted from the non-contact type IC card in accordance with the carrier signal transmitted in the transmitting step is received; and
transmitting step of transmitting the response signal amplified in the amplifying step of amplifying amplitude of the response signal to a predetermined value to the external unit.
